# FASCICULE DE BREVET EUROPEEN

(11) **EP 4 575 631 B1**
(45) Date de publication et mention de la délivrance du brevet: **15.04.2026**
(21) Numéro de dépôt: 24221262.9
(22) Date de dépôt: 18.12.2024
(51) Int. Cl.: G03B 11/04, G03B 15/05, H04N 23/56

(54) **DETECTION DE LA POSITION D'UN VOLET DE CAMERA PAR RETROECLAIRAGE**
KAMERAKLAPPENPOSITIONSDETEKTION MITTELS HINTERGRUNDBELEUCHTUNG
DETECTION OF THE SHUTTER POSITION OF A CAMERA BY BACKLIGHTING

(30) Priorité: 21.12.2023 FR 2314934
(43) Date de publication de la demande: 25.06.2025
(73) Titulaire: SAGEMCOM BROADBAND SAS, 92270 Bois-Colombes (FR)
(72) Inventeur: CHUSSEAU, Hugo, 92270 BOIS-COLOMBES (FR); NEDELCU, Radu, 92270 BOIS-COLOMBES (FR); MARTON, Alexandre, 92270 BOIS-COLOMBES (FR)
(74) Mandataire: Cabinet Boettcher

(56) Documents cités:
- US-A1- 2010 309 369
- US-A1- 2013 088 639
- US-A1- 2019 033 686
- US-B2- 11 714 331

## Description

La présente invention concerne le domaine des équipements électroniques intégrant un dispositif de capture d'images.

### ARRIERE PLAN DE L'INVENTION

Il est connu de l'état de la technique qu'un équipement électronique, tel qu'un boîtier décodeur, puisse intégrer une caméra permettant à un utilisateur de réaliser des vidéoconférences.

Usuellement une LED est agencée à proximité de la caméra afin qu'un utilisateur puisse savoir si la caméra est allumée ou éteinte.

Par ailleurs, la présence d'un capuchon permet de masquer temporairement le champ de vision de la caméra conférant à l'utilisateur un cadre plus confortable, d'un point de vue de sa vie privée.

Il arrive que l'utilisateur lance une application nécessitant l'emploi de la caméra en omettant de retirer le capuchon du champ de vision de celle-ci.

Il peut alors s'écouler un certain temps avant que l'utilisateur ne s'aperçoive de sa méprise ce qui n'est pas idéal.

### OBJET DE L'INVENTION

L'invention a notamment pour but de détecter plus aisément la position fermée d'un obturateur d'un dispositif de captures d'images lorsque celui-ci est allumé.

### RESUME DE L'INVENTION

A cet effet, on prévoit, selon l'invention, un équipement électronique, comprenant :
- un caisson pourvu d'une première ouverture,
- un dispositif de capture d'images doté d'un champ de vision,
- un obturateur mobile pourvu d'une ouverture, ledit obturateur étant monté mobile sur le caisson entre une position de travail et une position de repos de sorte que, lorsque l'obturateur mobile est dans sa position de travail, le dispositif de capture **d'images** puisse visualiser en service l'extérieur du caisson par l'intermédiaire de la première ouverture et de l'ouverture de l'obturateur mobile, et lorsque l'obturateur est dans sa position de repos, l'obturateur mobile masque la première ouverture pour le dispositif de capture d'image, et
- une source lumineuse.

Selon l'invention, l'obturateur mobile comprend un dispositif optique agencé pour guider la lumière de sorte que lorsque **l'obturateur** mobile est dans sa position de repos, le dispositif optique est agencé pour guider la lumière depuis la source lumineuse jusqu'au champ de vision du dispositif de capture d'images.

De la sorte, si le dispositif de capture **d'images** est allumé alors que le volet est en position de repos, le dispositif de capture d'images va imager une image qui ne sera pas noire de par la réception de la lumière guidée par le dispositif optique. Dès lors, l'équipement électronique va pouvoir détecter via le dispositif de capture d'images lui-même l'association non souhaitée dispositif de capture d'images allumé/volet en position de repos.

De manière avantageuse, avec l'invention, il n'y a pas de risque de confusion possible lorsque le dispositif de capture **d'images** image une image noire : nécessairement c'est que l'environnement ambiant est trop sombre pour que ledit dispositif puisse fonctionner correctement et non qu'il image le volet obturateur.

De manière avantageuse, **l'invention n'a** pas besoin de recourir à un capteur supplémentaire dédié pour détecter la position de l'obturateur mobile.

Par la suite les termes « supérieur », « inférieur **»,** « avant **»,** « arrière » **...** doivent **s'étendre** selon la position en service de l'équipement électronique lorsque celui-ci repose sur une structure plane qui est préférentiellement parallèle à l'horizontale.

On propose de plus un équipement électronique tel que précédemment décrit, dans lequel le dispositif optique est agencé sur l'obturateur mobile de sorte à s'étendre en regard du dispositif de capture d'images et de ladite source lumineuse lorsque l'obturateur mobile est dans sa position de repos.

On propose de plus un équipement électronique tel que précédemment décrit, dans lequel le dispositif optique dudit obturateur mobile s'étend jusqu'à l'extérieur dudit caisson.

On propose de plus un équipement électronique tel que précédemment décrit, dans lequel le dispositif de capture d'images et ladite source lumineuse sont fixées sur une carte électronique de l'équipement électronique, l'ensemble formé par la carte électronique, le dispositif de capture d'images et la source lumineuse étant fixe vis-à-vis du caisson.

On propose de plus un équipement électronique tel que précédemment décrit, dans lequel le dispositif optique de l'obturateur mobile comprend au moins une portion translucide.

On propose de plus un équipement électronique tel que précédemment décrit, dans lequel le dispositif optique forme une seule pièce avec ledit obturateur mobile.

On propose de plus un équipement électronique tel que précédemment décrit, dans lequel ladite source lumineuse est apte à émettre un clignotement qui est détectable par le dispositif de capture d'images, lorsque l'obturateur mobile est dans sa position de repos.

On propose de plus un équipement électronique tel que précédemment décrit, dans lequel le clignotement répond à une séquence complexe.

On propose de plus un équipement électronique tel que précédemment décrit, dans lequel le dispositif optique dudit obturateur mobile comporte une figure positionnée en regard du champ de vision du dispositif de capture d'images, lorsque l'obturateur mobile est dans sa position de repos.

On propose de plus un équipement électronique tel que précédemment décrit, dans lequel l'équipement électronique est un boîtier décodeur.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue de face d'une portion de l'équipement électronique selon un mode de réalisation particulier de l'invention ;
[Fig. 2] la figure 2 est une vue de face d'une partie de la portion de l'équipement électronique illustrée à la figure 1 ;
[Fig. 3] la figure 3 est une vue postérieure de la partie illustrée à la figure 2, un obturateur mobile de l'équipement électronique étant dans sa position de travail ;
[Fig. 4] la figure 4 est une vue identique à celle de la figure 3, l'obturateur mobile étant dans sa position de repos ;
[Fig. 5] la figure 5 est une vue schématique du dessus d'une partie de l'équipement électronique illustré à la figure 1, lorsque ledit obturateur mobile est dans sa position de travail ;
[Fig. 6] la figure 6 est une vue identique à celle de la figure 5, lorsque ledit obturateur mobile est dans sa position de repos.
[Fig. 7] la figure 7 illustre une figure pouvant être portée par l'obturateur mobile de l'équipement électronique illustré à la figure 1.

### DESCRIPTION DETAILLEE DE L'INVENTION

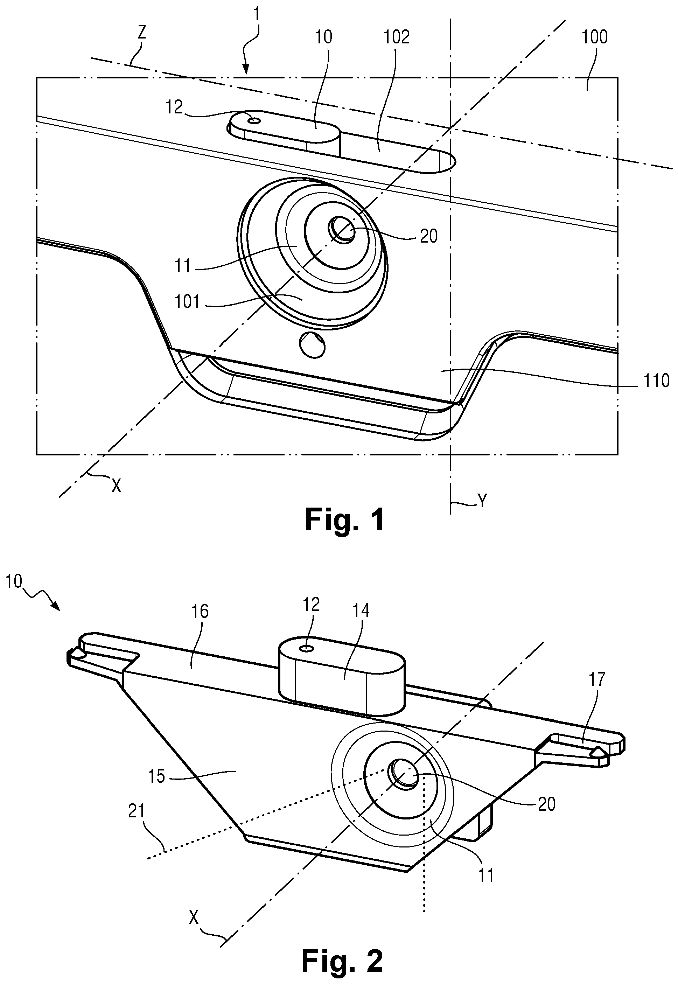

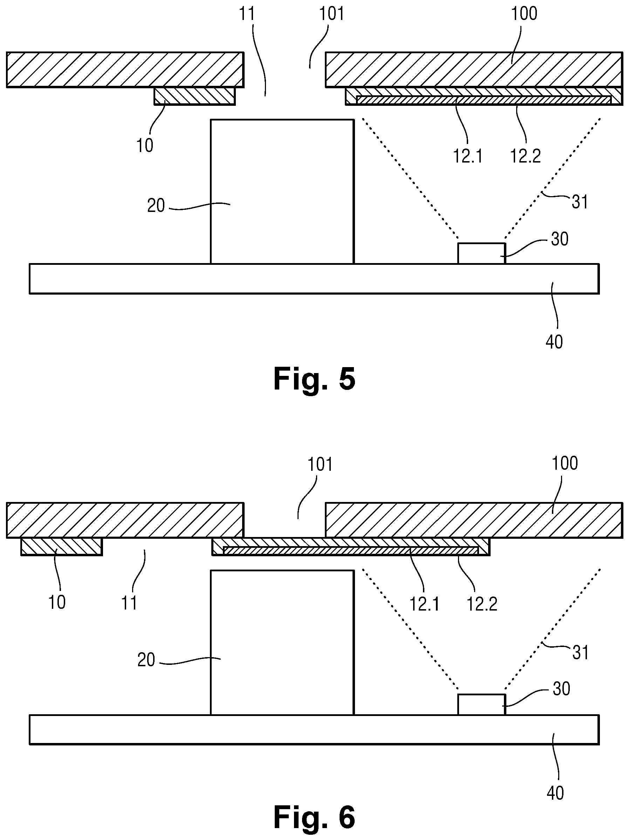

En référence aux figures 1 à 6, il est décrit un équipement électronique 1 selon un mode de réalisation particulier de l'invention.

L'équipement électronique 1 est ici un boîtier décodeur. L'équipement électronique 1 comprend un caisson 100. Le caisson est doté d'une paroi supérieure, d'une paroi inférieure et d'au moins une paroi latérale reliant entre elles la paroi supérieure et la paroi inférieure. De préférence, la paroi inférieure et la paroi supérieure sont parallèles entre elles. La paroi inférieure et la paroi supérieure sont par exemple conformées en rectangle ou en carré de préférence aux bords arrondis. Par exemple quatre parois latérales relient entre elles la paroi supérieure et la paroi inférieure. Les parois latérales s'étendent par exemple parallèlement entre elles deux à deux. Par exemple chacune des parois latérales s'étendant orthogonalement à au moins l'une et de préférence aux deux parois inférieure et supérieure.

Le caisson 100 est globalement conformé en un parallélépipède rectangle. Le caisson 100 présente de préférence des bords arrondis et non des arêtes vives.

Le caisson 100 est conformée de sorte que lorsqu'il repose sur un support, sa paroi inférieure et sa paroi supérieure s'étendent parallèlement au support et ses parois latérales s'étendent orthogonalement au support.

Le caisson 100 est pourvu d'une première ouverture 101. De préférence, la première ouverture 101 est ménagée dans une paroi latérale du caisson 100. La première ouverture 101 est ainsi débouchant à une première extrémité à l'intérieur du caisson 100 et à une deuxième extrémité à l'extérieur du caisson 100. La première ouverture 101 s'étend selon un premier axe X à travers la paroi latérale du caisson 100. Le premier axe X est ici horizontal lorsque le caisson 100 repose sur un socle plan horizontal.

La première ouverture 101 présente par exemple une section transversale se rétrécissant à mesure que ladite ouverture 101 se rapproche de l'intérieur du caisson 100. La première ouverture 101 est ainsi conformée en un tronc de cône. L'équipement électronique 1 comprend également un dispositif de capture d'images. Le dispositif de capture d'images est par exemple une caméra 20. La caméra 20 est positionnée à l'intérieur du caisson 100 de sorte à pouvoir visualiser l'extérieur du caisson par l'intermédiaire de la première ouverture 101. Typiquement, la caméra 20 présente un champ de vision 21 qui, lorsque la caméra est allumée, est en regard de la première ouverture 101. De la sorte, au moins une portion du champ de vision de la caméra 20 s'étend à travers la première ouverture 101. Typiquement, le champ de vision 21 de la caméra 20 est centré autour d'au moins un axe de vision. De préférence, ledit axe de vision s'étend parallèlement au premier axe X. Le champ de vision 21 s'étend de préférence coaxialement au premier axe X et/ou à la première ouverture 101.

De préférence, la caméra 20 est montée fixe vis-à-vis du caisson 100. La caméra 20 est ainsi fixée soit directement soit indirectement à au moins une paroi du caisson. Par exemple la caméra 20 est fixée à au moins une paroi du caisson par l'intermédiaire d'au moins une carte électronique 40.

Par exemple, la caméra 20 est montée fixe sur une carte électronique 40 qui est elle-même montée fixe sur au moins une partie du caisson 100. La carte électronique 40 et la caméra sont ainsi fixes dans le caisson 100.

La paroi latérale du caisson 100 dans laquelle est ménagée la première ouverture 101 forme ainsi la paroi avant 110 du caisson 100, c'est-à-dire la paroi du caisson 100 destinée à faire face à l'utilisateur.

Par ailleurs, l'équipement électronique 1 comprend également une source lumineuse 30. La source lumineuse 30 est par exemple une diode électroluminescente (plus connue sous l'acronyme anglais de LED). La source lumineuse 30 est positionnée à l'intérieur du caisson 100. Typiquement, la source lumineuse 30 présente un champ d'éclairage 31 qui, lorsque la source lumineuse 30 est activée, est en regard d'au moins une paroi du caisson 100. Typiquement, le champ d'éclairage 31 de la source lumineuse 30 est centré autour d'au moins un axe d'éclairage. De préférence, ledit axe d'éclairage s'étend parallèlement au premier axe X et/ou à l'axe de vision de la caméra 20. La source lumineuse 30 et la caméra 20 sont ainsi de préférence agencées en regard de la même paroi du caisson 100, l'une à côté de l'autre et orientées dans la même direction.

De préférence, la source lumineuse 30 est montée fixe vis-à-vis du caisson 100. La source lumineuse 30 est ainsi fixée soit directement soit indirectement à au moins une paroi du caisson. Par exemple la source lumineuse 30 est fixée à au moins une paroi du caisson par l'intermédiaire d'au moins une carte électronique.

Par exemple, la source lumineuse 30 est montée fixe sur une carte électronique qui est elle-même montée fixe sur au moins une partie du caisson 100. La carte électronique et la source lumineuse 30 sont ainsi fixes dans le caisson 100.

De préférence, ladite carte électronique est la carte électronique 40. La source lumineuse 30 et la caméra 20 sont ainsi portées par le même support.

Par ailleurs, l'équipement électronique 1 comprend également un dispositif optique 12.

De préférence, le dispositif optique 12 est un guide-lumière. Le dispositif optique 12 permet ainsi de guider la lumière émise par la source lumineuse 30 comme cela sera décrit plus bas.

A cet effet, le dispositif optique 12 est agencé dans le caisson entre la paroi du caisson dans laquelle est ménagée la première ouverture 101 (soit ici la paroi avant 110 du caisson) et la source lumineuse 30. La source lumineuse 30 est ainsi apte à éclairer l'arrière du dispositif optique. Une partie du dispositif optique 12 s'étend toutefois jusqu'à l'extérieur du caisson 100 à travers au moins une deuxième ouverture 102 du caisson 100.

De préférence, la deuxième ouverture 102 est ménagée dans la paroi supérieure du caisson 100. La deuxième ouverture 102 est ainsi débouchant à une première extrémité à l'intérieur du caisson 100 et à une deuxième extrémité à l'extérieur du caisson 100. La deuxième ouverture 102 est ménagée dans le caisson 100 à proximité de la première ouverture 101. Par exemple la deuxième ouverture 102 est ménagée à l'aplomb de la première ouverture 101. La deuxième ouverture 102 s'étend selon un deuxième axe Y à travers la paroi supérieure du caisson 100. Le deuxième axe Y est orthogonal ici au premier axe X. Le deuxième axe Y s'étend ici à la verticale lorsque le caisson 100 repose sur un socle plan horizontal.

La deuxième ouverture 102 présente par exemple une section transversale oblongue. La deuxième ouverture 102 présente par exemple une section transversale régulière sur toute sa longueur.

Le dispositif optique 12 s'étend ainsi dans le caisson 100 depuis la source lumineuse 30 jusqu'à l'extérieur du caisson 100 via la deuxième ouverture 102.

Le dispositif optique 12 est conformée en une pièce plate. Le dispositif optique 12 présente ainsi une face principale avant 12.1 agencée en regard de la paroi du caisson 110 dans laquelle est ménagée la première ouverture 101 et une face principale arrière 12.2, opposée à la face principale avant 12.1. En service, la source lumineuse 30 éclaire ainsi la face principale arrière 12.2 du dispositif optique 12. L'épaisseur de la pièce est donc très inférieure aux dimensions des deux faces principales. Le dispositif optique 12 est ainsi agencé de sorte à s'étendre parallèlement à la paroi avant 110 du caisson 200.

Par ailleurs, le dispositif optique 12 comporte au moins une portion permettant la transmission de la lumière. Ladite portion n'est, de préférence, ni transparente ni opaque. De préférence, ladite portion est de couleur laiteuse. De préférence, ladite portion est translucide. *On rappelle ici qu'un objet est dit translucide s'il laisse passer la lumière sans permettre* de *distinguer nettement d'autres objets à travers lui, en raison de multiples réfractions anisotropes des rayons lumineux. Il se distingue ainsi d'un objet transparent, qui laisse passer la lumière* et *permet* de *distinguer les objets à travers lui, et d'un objet opaque qui absorbe ou réfléchit les rayons lumineux. Un objet translucide diffuse la lumière lors de sa transmission à travers lui, ce qui rend l'observation au travers dudit objet difficile ou impossible.*

Par exemple la portion a une transmittance qui est comprise entre 40 et 80% et qui est par exemple comprise entre 50 et 70% et qui est par exemple de 60%.

Ladite portion est par exemple en polycarbonate teinté et par exemple en polycarbonate teinté par du dioxyde de titane.

De préférence, ladite portion permettant la transmission de la lumière forme toute la pièce constituant le dispositif optique 12. Ainsi tout le dispositif optique 12 est ici translucide.

L'équipement électronique 1 comprend également un obturateur mobile 10 de la caméra 20. L'obturateur mobile 10 est agencé à l'intérieur du caisson 100.

De préférence, l'obturateur mobile 10 est monté mobile vis-à-vis du caisson 100. Par exemple, l'obturateur mobile 10 est monté mobile dans le caisson 100 selon au moins un mouvement de translation et de préférence selon un unique mouvement de translation. Par exemple, l'obturateur mobile 10 est monté mobile dans le caisson 100 selon un mouvement de translation selon un troisième axe Z qui est ici orthogonale au premier axe X et au deuxième axe Y. Le troisième axe Z s'étend ici à l'horizontal lorsque le caisson 100 repose sur un socle plan horizontal. L'obturateur mobile 10 comporte une platine prolongée par une languette de préhension 14.

Par exemple la platine comporte une embase 15 prolongée supérieurement par une bordure 16.

L'embase 15 est par exemple conformée en une pièce plate. L'embase 15 présente ainsi une face principale avant agencée en regard de la paroi du caisson 110 dans laquelle est ménagée la première ouverture 101 et une face principale arrière, opposée à la face principale avant. L'épaisseur de l'embase 15 est donc très inférieure aux dimensions des deux faces principales. L'embase 15 est ainsi agencée de sorte à s'étendre parallèlement à la paroi avant du caisson 100 et/ou au dispositif optique 12.

Une troisième ouverture 11 est ménagée à l'intérieur de l'obturateur mobile 10 et est de préférence ici à l'intérieur de l'embase 15. La troisième ouverture 11 est ainsi débouchant à une première extrémité à l'intérieur du caisson 100 (sur la face principale arrière de l'obturateur mobile 10) et à une deuxième extrémité à l'extérieur du caisson 100 (sur la face principale avant de l'obturateur mobile 10). La troisième ouverture 11 s'étend selon un axe donné T qui est de préférence parallèle au premier axe X. La troisième ouverture 11 présente par exemple une section transversale circulaire. La troisième ouverture 11 présente par exemple une section transversale se rétrécissant en direction de l'intérieur du caisson 100. La troisième ouverture 11 est ainsi conformée en un tronc de cône.

La bordure 16 surplombe ici une extrémité supérieure de l'embase 15. De préférence, la bordure 16 s'étend à l'orthogonale de l'embase 15.

La bordure 16 est par exemple conformée en une pièce plate. La bordure 16 présente ainsi une face principale supérieure agencée en regard de la face supérieure du caisson et une face principale inférieure, opposée à la face principale supérieure. L'épaisseur de la bordure est donc très inférieure aux dimensions des deux faces principales. La bordure 16 est ainsi agencée de sorte à s'étendre parallèlement à la paroi supérieure du caisson 100 et/ou orthogonalement à la paroi avant 110 du caisson comprenant la première ouverture 101.

La languette de préhension 14 s'étend de préférence à partir de la bordure en direction de la paroi supérieure du caisson. La languette 14 s'étend rectilignement à partir de la bordure selon un axe qui est orthogonal à la bordure et en particulier qui est orthogonal à la face supérieure de la bordure.

De préférence, l'obturateur mobile 10 est agencé dans le caisson de sorte que la languette de préhension 14 s'étende à travers la deuxième ouverture 102 pour dépasser de ladite deuxième ouverture 102. Ainsi, un utilisateur peut déplacer l'obturateur mobile relativement au caisson 100 en s'aidant de la languette de préhension 14.

De préférence, l'obturateur mobile 10 et/ou le reste de l'équipement électronique 1 sont équipés d'au moins un moyen de guidage pour faciliter le déplacement de l'obturateur dans le caisson 100. Par exemple l'obturateur mobile 10 et le reste de l'équipement électronique sont l'un équipé de moyens de guidage mâle et l'autre de moyens de guidage femelle pour guider la translation de l'obturateur mobile 10 dans le caisson 100. Par exemple :
- la bordure 16 est équipée sur sa face supérieure d'au moins un pion apte à coopérer avec au moins un rail (non visible ici) ménagé à l'intérieur du caisson, le rail s'étendant parallèlement à l'axe Z, et/ou
- l'embase 15 est équipée sur sa face arrière d'au moins un rail s'étendant parallèlement à l'axe Z apte à coopérer avec au moins un doigt solidaire de la caméra 20.

La languette de préhension 14 est de préférence de forme oblongue. La section transversale (selon un plan de section de normale l'axe Y) de la languette de préhension est ainsi de forme oblongue.

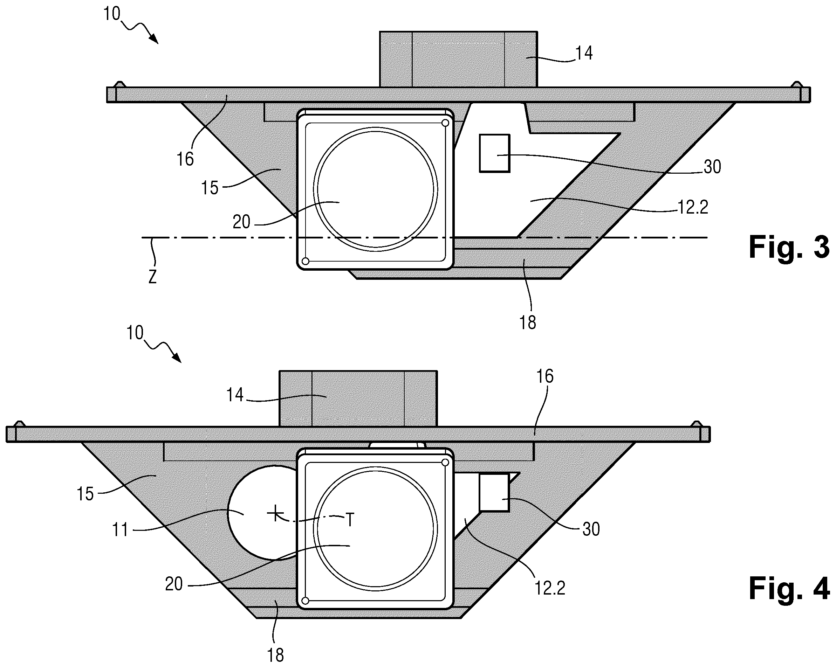

On comprend ainsi que la deuxième ouverture 102 définit deux positions d'extrémité de l'obturateur mobile 10 :
- une première position d'extrémité dans laquelle la languette de préhension 14 vient en butée contre l'un des bords longitudinaux de la deuxième ouverture 102, dite position de travail (figure 1),
- une deuxième position d'extrémité dans laquelle la languette de préhension 14 vient en butée contre l'autre des bords longitudinaux de la deuxième ouverture 102, dite position de repos (figure 4).

De préférence, les bords longitudinaux de la deuxième ouverture 102 épousent la forme d'un bord correspondant de la languette de préhension 14.

On comprend également que l'obturateur mobile 10 est agencé dans le caisson 100 entre la paroi avant 110 du caisson 100 et la caméra 20.

On comprend également que l'obturateur mobile 10 est agencé dans le caisson 100 entre la paroi avant 110 du caisson 100 et la source lumineuse 30.

Une partie de l'obturateur mobile 10 (ici la languette de préhension 14) s'étend toutefois jusqu'à l'extérieur du caisson 100 à travers la deuxième ouverture 102 du caisson 100.

De plus, l'obturateur mobile 10 est agencé dans le caisson de sorte que dans sa position de travail, sa troisième ouverture 11 se trouve en regard de la première ouverture 101 du caisson 100. De préférence, dans cette position la première ouverture 101 et la troisième ouverture 11 s'étendent coaxialement l'une à l'autre. De la sorte, la caméra 20 peut visualiser l'extérieur du caisson 100.

De plus, l'obturateur mobile 10 est agencé dans le caisson de sorte que dans sa position de repos, sa troisième ouverture 11 est décalée de la première ouverture 101 du caisson 100. Le champ de vision de la caméra 20 est alors masqué par l'obturateur mobile 10 et plus précisément par l'embase 15. De la sorte, la caméra 20 ne peut visualiser l'extérieur du caisson 100.

Par ailleurs, le dispositif optique 12 est porté par l'obturateur mobile 10. Le dispositif optique 12 est ainsi fixé à l'obturateur mobile 10. Le dispositif optique 12 est donc solidaire en translation de l'obturateur mobile 10.

De préférence, le dispositif optique 12 et l'obturateur mobile 10 forment une unique pièce. Par exemple l'obturateur mobile 10 est surmoulé sur le dispositif optique 12.

Le dispositif optique 12 est agencé entre l'obturateur mobile 10 et la source lumineuse 30. Le dispositif optique 12 est ainsi agencé de sorte que sa face principale avant soit en regard de la face principale arrière de l'embase 15 de l'obturateur mobile 10.

Le dispositif optique 12 est par ailleurs agencé de sorte qu'une portion dudit dispositif optique 12 s'étende à travers la languette de préhension 14 jusqu'à l'extérieur du caisson 100. Par exemple, la languette de préhension 14 comporte une quatrième ouverture à travers laquelle s'étend ladite portion. De la sorte, un utilisateur peut visualiser ladite portion depuis l'extérieur du caisson 100 lorsqu'il regarde la languette de préhension. La quatrième ouverture s'étend selon un axe donné qui est de préférence parallèle au deuxième axe Y. La quatrième ouverture débouche ainsi sur la face supérieure de la languette de préhension 14. La quatrième ouverture présente par exemple une section transversale circulaire. La quatrième ouverture présente par exemple une section transversale circulaire sur toute sa longueur.

Le dispositif optique 12 est par ailleurs agencé de sorte à présenter toujours au moins une zone en regard de la source lumineuse 30 quelle que soit la position de l'obturateur mobile 10 relativement au caisson. Ainsi, la position de l'obturateur mobile 10 n'influe pas sur la diffusion de la lumière issue de la source lumineuse 30 par le dispositif optique 12 puisque la source lumineuse 30 est montée en permanence en regard du dispositif optique 12.

Le dispositif optique 12 est par ailleurs agencé de sorte que lorsque l'obturateur mobile 10 est dans sa position de repos, la caméra 20 se trouve en regard d'au moins une zone du dispositif optique 12. En revanche, dans la position de travail de l'obturateur mobile 10, le dispositif optique 12 n'est pas en regard de la caméra 20.

Le fonctionnement de l'équipement électronique 1 selon une première mise en œuvre va désormais être décrit ci-dessous. Lorsqu'un utilisateur souhaite réaliser une visioconférence, il active la caméra 20. A cet instant, la source lumineuse 30 est désactivée.

Dès lors, si la caméra 20 détecte une image autre qu'une image noire, la situation est nominale. Ceci signifie que l'utilisateur a bien déplacé l'obturateur mobile 10 dans sa position de travail. La troisième ouverture 11 est alors alignée avec la première ouverture 101 et la caméra 20 peut ainsi visualiser l'extérieur du caisson 100 et donc l'utilisateur. Ceci signifie également que l'éclairage environnant est suffisant pour que la caméra 20 puisse imager correctement ledit environnement.

Un organe de commande de l'équipement électronique 1 (tel qu'un contrôleur, un processeur **...** intégré à la carte électronique 40 et/ou à la caméra 20 et/ou à au moins un autre élément du caisson 100) en déduit ainsi que l'obturateur mobile 10 se trouve dans sa position de travail et commande alors l'activation de la source lumineuse 30.

De préférence, la source lumineuse 30 émet alors un signal lumineux en continu.

Dès lors, l'utilisateur peut s'assurer que la caméra 20 est bien allumée par l'intermédiaire de la portion du dispositif optique 12 accessible par la languette de préhension 14. En effet, la source lumineuse 30 éclaire le dispositif optique 12 qui diffuse de la lumière jusqu'à l'extérieur du caisson 100 via la deuxième ouverture 102. En revanche si la caméra 20 est allumée et détecte une image noire, la situation est dégradée. En effet, dans le cas où la caméra 20 identifie une image noire, deux options sont possibles. D'une part, soit l'obturateur mobile 10 est toujours en position de repos et masque le champ de vision de la caméra 20 ; soit l'environnement dans lequel l'équipement électronique 1 est placé est particulièrement sombre. La distinction de ces deux cas de figure est particulièrement importante car dans le premier cas, l'utilisateur doit déplacer l'obturateur mobile 10 pour dégager le champ de vision de la caméra 20. Alors que, dans le second cas, aucune action n'est requise vis-à-vis de l'équipement électronique 1. En revanche l'utilisateur doit éclairer davantage son environnement.

Le dispositif optique 12 permet de guider la lumière depuis la source lumineuse 30 jusqu'à la caméra 20. Il va ainsi être possible pour la caméra 20 de détecter cette lumière. C'est sur ce principe que l'on va s'appuyer pour déterminer la position de l'obturateur mobile 10.

Lorsque que la caméra 20 détecte une image noire, l'organe de commande de l'équipement électronique 1 ordonne alors à la source lumineuse 30 d'émettre un signal discontinu tel qu'un clignotement.

Si ce clignotement est détecté par la caméra 20, cela signifie que la caméra 20 est en regard du dispositif optique 12 : en effet, le dispositif optique 12 diffuse le clignotement émis par la source lumineuse 30 jusqu'à la caméra 20. L'organe de commande en déduit que l'obturateur mobile 10 se trouve dans sa position de repos.

L'organe de commande peut alors avertir l'utilisateur qu'il doit déplacer l'obturateur mobile 10 par exemple par l'intermédiaire d'un signal sonore et/ou lumineux.

Une fois que l'utilisateur a déplacé l'obturateur mobile 10 dans sa position de travail, la caméra 20 n'est normalement plus en mesure de détecter ledit clignotement car elle n'est plus en regard du dispositif optique 12, son champ de vision étant libre. Dès lors, l'organe de commande de l'équipement électronique 1 contraint la source lumineuse 30 à émettre un signal lumineux en continu pour revenir à la situation nominale.

Si le clignotement n'est pas détecté par la caméra 20, cela signifie que la caméra 20 n'est pas en regard du dispositif optique 12 et que son champ de vision est donc libre. L'organe de commande en déduit que l'obturateur mobile 10 se trouve dans sa position de travail. L'organe de commande peut alors avertir l'utilisateur qu'il doit éclairer davantage l'environnement ambiant par exemple par l'intermédiaire d'un signal sonore et/ou lumineux. Puisque l'obturateur mobile 10 se trouve dans sa position de travail, l'organe de commande de l'équipement électronique 1 contraint la source lumineuse 30 à émettre un signal lumineux en continu.

Préférentiellement, la source lumineuse 30 émet une séquence de clignotement complexe. Par « complexe », on entend que le clignotement émis par la source lumineuse est différent d'une simple alternance entre un flash lumineux d'une durée prédéterminée avec une absence d'éclairage d'une durée prédéterminée identique à la durée du flash lumineux soit d'une simple succession de 0 et de 1 si l'on rapporte le clignotement à un signal binaire.

De préférence, le clignotement émis par la source lumineuse 30 est également différent d'une simple alternance entre un flash lumineux d'une durée prédéterminée avec une absence d'éclairage d'une durée prédéterminée différente de celle du flash lumineux.

De préférence, la séquence de clignotement émis par la source lumineuse 30 n'est pas régulière et présente des flashs lumineux de durées différentes et/ou des absences d'éclairage de durées différentes comme par exemple et de manière non limitative l'enchainement suivant :
- Flash d'une durée Δt
- Absence d'éclairage d'une durée de 2 fois Δt
- Flash d'une durée Δt
- Absence d'éclairage d'une durée Δt
- Flash d'une durée de 2 fois Δt
- Absence d'éclairage d'une durée Δt.

De préférence, la séquence de clignotement émis par la source lumineuse 30 est répétée de manière périodique.

Ce séquencement complexe permet de limiter un risque de confusion entre le clignotement voulu de ladite source lumineuse 30 vis-à-vis d'un potentiel clignotement secondaire provenant d'un autre dispositif placé dans le champ de vision de la caméra 20. L'organe de commande pourrait en effet sinon déduire du deuxième cas de figure que l'obturateur mobile 10 est en position de repos ce qui n'est pas le cas.

Par exemple l'obturateur mobile 10 détermine si la caméra 20 visualise le clignotement de la source lumineuse 30. La détection du clignotement peut se faire par analyse d'images par exemple ou bien par analyse de la quantité de lumière capturée par les cellules optiques de la caméra 20.

Dans ce dernier cas, l'organe de calcul se base sur la valeur de la quantité de lumière maximale pouvant être capturée par les cellules optiques de la caméra Lm lorsqu'un flash lumineux est généré par la source lumineuse 30 et transmise par le dispositif optique 12. Par exemple la quantité de lumière maximale est prédéterminée (par exemple via une ou plusieurs données constructeurs) et/ou estimée lors d'une phase d'initialisation de l'équipement électronique 1 lors d'au moins un test de qualification en exposant la caméra 20 à au moins une source lumineuse très forte telle qu'une lampe puissante agencée à faible distance de la caméra (la valeur ainsi estimée peut optionnellement être comparée à au moins une donnée constructeur pour être corrigée en fonction).

En service, si la quantité de lumière capturée est inférieure à 50% de la valeur de Lm, alors on considère que la source lumineuse 30 n'émet pas de lumière. En revanche, si la quantité de lumière captée est supérieure à 50% de Lm, alors on considère que la source lumineuse 30 émet un flash.

L'organe de commande détecte donc la quantité de lumière captée par la caméra 20 dans le temps, lui permettant de reconnaître une séquence de clignotement complexe.

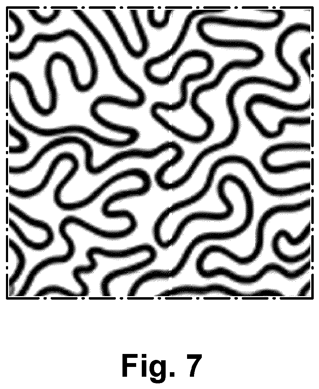

Le fonctionnement de l'équipement électronique 1 selon une deuxième mise en œuvre va désormais être décrit ci-dessous. Dans cette deuxième mise en œuvre, le dispositif optique 12 dudit obturateur mobile 10 comporte une figure (symbole, dessin, code-barres en deux dimensions ou en trois-dimensions, signes alphas-numériques, motif, imprimé ou toute autre représentation) positionnée au moins en partie en regard du champ de vision de la caméra 20, lorsque l'obturateur mobile 10 est dans sa position de repos. Pour faciliter sa détection, la figure doit être de préférence abstraite et/ou ne pas représenter un objet ou une personne potentiellement présent dans l'environnement de l'équipement électronique 1 (chaise, stylo, visage, ...). Un exemple de figure non limitatif est illustré à la figure 7.

La figure est par exemple disposée sur une étiquette transparente elle-même apposée sur le dispositif optique 12. La figure est par exemple imprimée, collée, sérigraphiée, gravée ... sur ladite étiquette.

Lorsqu'un utilisateur souhaite réaliser une visioconférence, il active la caméra 20. A cet instant, la source lumineuse 30 est désactivée.

Dès lors, si la caméra 20 détecte une image autre qu'une image noire, la situation est nominale. Ceci signifie que l'utilisateur a bien déplacé l'obturateur mobile 10 dans sa position de travail. La troisième ouverture 11 est alors alignée avec la première ouverture 101 et la caméra 20 peut ainsi visualiser l'extérieur du caisson 100 et donc l'utilisateur. Ceci signifie également que l'éclairage environnant est suffisant pour que la caméra 20 puisse imager correctement ledit environnement. A la suite de cela, la source lumineuse 30 est activée suite à un ordre donné par l'organe de commande. De préférence, la source lumineuse 30 émet un signal lumineux en continu. Dès lors, l'utilisateur peut s'assurer que la caméra 20 est bien allumée par l'intermédiaire de la portion du dispositif optique 12 accessible par la languette de préhension 14. En effet, la source lumineuse 30 éclaire le dispositif optique 12 qui diffuse de la lumière jusqu'à l'extérieur du caisson 100 via la deuxième ouverture 102.

En revanche si la caméra 20 est allumée et détecte une image noire, la situation est dégradée. En effet, dans le cas où la caméra 20 identifie une image noire, deux options sont possibles. D'une part, soit l'obturateur mobile 10 est toujours en position de repos et masque le champ de vision de la caméra 20 ; soit l'environnement dans lequel l'équipement électronique 1 est placé est particulièrement sombre.

Lorsque que la caméra 20 détecte une image noire, l'organe de commande de l'équipement électronique 1 ordonne alors à la source lumineuse 30 d'émettre un signal lumineux (en continu ou par clignotement).

Si la figure est détectée par la caméra 20, cela signifie que la caméra 20 est en regard du dispositif optique 12 : en effet, le dispositif optique 12 diffuse la lumière émise par la source lumineuse 30 jusqu'à la caméra 20. L'organe de commande en déduit que l'obturateur mobile 10 se trouve dans sa position de repos.

L'organe de commande peut alors avertir l'utilisateur qu'il doit déplacer l'obturateur mobile 10 par exemple par l'intermédiaire d'un signal sonore et/ou lumineux.

Une fois que l'utilisateur a déplacé l'obturateur mobile 10 dans sa position de travail, la caméra 20 n'est normalement plus en mesure de détecter la figure car elle n'est plus en regard du dispositif optique 12, son champ de vision étant libre. Dès lors, l'organe de commande de l'équipement électronique 1 contraint la source lumineuse 30 à émettre un signal lumineux en continu pour revenir à la situation nominale (si cela n'était pas déjà le cas). Si aucune figure n'est détectée par la caméra 20, cela signifie que la caméra 20 n'est pas en regard du dispositif optique 12 et que son champ de vision est donc libre. L'organe de commande en déduit que l'obturateur mobile 10 se trouve dans sa position de travail. L'organe de commande peut alors avertir l'utilisateur qu'il doit éclairer davantage l'environnement ambiant par exemple par l'intermédiaire d'un signal sonore et/ou lumineux. Puisque l'obturateur mobile 10 se trouve dans sa position de travail, l'organe de commande de l'équipement électronique 1 contraint la source lumineuse 30 à émettre un signal lumineux en continu (si cela n'était pas déjà le cas). Par exemple l'organe de commande détecte la figure par analyse des images transmises par la caméra 20. Par exemple l'organe de commande exécute un algorithme de comparaison d'images (entre les images générées par la caméra et une image de référence de la figure) avec seuil d'acceptation. Bien entendu, l'invention n'est pas limitée au mode de réalisation décrit mais englobe toute variante entrant dans le champ de l'invention telle que définie par les revendications.

En particulier, l'équipement électronique 1 est, ici, un boîtier décodeur, mais l'invention peut également être intégrée à un ordinateur, à une télévision, et à tout autre équipement électronique intégrant un dispositif de capture d'images (set-top-box, video-sound-box, ...).

En particulier, le caisson 100 peut être un cube, un parallélépipède, un cylindre, un prisme ou une quelconque autre forme permettant d'intégrer la présente invention. Le dispositif optique 12 et l'obturateur mobile 10 peuvent être deux pièces distinctes fixées l'une à l'autre.

Bien qu'ici l'équipement électronique comporte une seule source lumineuse, l'équipement électronique pourra comporter deux sources lumineuses distinctes. Par exemple l'une des sources pourra être utilisée pour indiquer à l'utilisateur l'état d'activation du dispositif de capture d'images ; et l'autre des sources pourra être utilisée pour détecter si l'obturateur mobile est en position de travail ou de repos.

Bien qu'ici la figure soit portée par une étiquette, la figure pourra également être portée directement par le dispositif optique par exemple en étant imprimé, collée, sérigraphiée, gravée ... directement sur le dispositif optique.

Le dispositif optique décrit pourra être agencé entièrement à l'intérieur du caisson. Dans ce cas, l'équipement électronique comprendra de préférence au moins un dispositif optique additionnel pour guider la lumière d'au moins une source (dont l'activation sera synchronisée avec celle du dispositif de capture d'images), le dispositif optique additionnel comprenant une portion s'étendant à l'extérieur du caisson afin que l'utilisateur puisse détecter si le dispositif de capture d'images est allumé ou éteint.

Au moins une portion du dispositif optique pourra être dans un autre matériau que ce qui a été indiqué. Ladite portion pourra ainsi être en ou à base de polycarbonate et/ou polypropylène et/ou PMMA ... qui sera (ou seront) teintés par dioxyde de titane, par charges par exemple en matière plastique, **...**

On pourra également envisager d'avoir un dispositif optique au moins en partie transparent. On préférera toutefois avoir au moins une portion dudit dispositif optique translucide.

## Revendications

1. Equipement électronique (1), comprenant :
- un caisson (100) pourvu d'une première ouverture (101),
- un dispositif de capture d'images (20) dotée d'un champ de vision,
- un obturateur mobile (10) pourvu d'une ouverture (11), ledit obturateur (10) étant monté mobile sur le caisson (100) entre une position de travail et une position de repos de sorte que, lorsque l'obturateur mobile (10) est dans sa position de travail, le dispositif de capture d'images (20) puisse visualiser en service l'extérieur du caisson (100) par l'intermédiaire de la première ouverture (101) et de l'ouverture (11) de l'obturateur mobile, et lorsque l'obturateur (10) est dans sa position de repos, l'obturateur mobile (10) masque la première ouverture (101) pour le dispositif de capture d'images (20), et
- une source lumineuse (30) ;
**caractérisé en ce que** ledit obturateur mobile (10) comprend un dispositif optique (12) agencé pour guider la lumière et **en ce que**, lorsque l'obturateur mobile (10) est dans sa position de repos, le dispositif optique (12) est agencé pour guider la lumière depuis la source lumineuse (30) jusqu'au champ de vision du dispositif de capture d'images (20).

2. Equipement électronique (1), selon la revendication 1, dans lequel le dispositif optique (12) est agencé sur l'obturateur mobile (10) de sorte à s'étendre en regard du dispositif de capture d'images (20) et de ladite source lumineuse (30) lorsque l'obturateur mobile (10) est dans sa position de repos.

3. Equipement électronique (1) selon la revendication 1 ou la revendication 2, dans lequel le dispositif optique (12) dudit obturateur mobile (10) s'étend jusqu'à l'extérieur dudit caisson (100).

4. Equipement électronique (1), selon l'une des revendications 1 à 3, dans lequel le dispositif de capture d'images (20) et ladite source lumineuse (30) sont fixées sur une carte électronique (40) de l'équipement électronique (1), l'ensemble formé par la carte électronique (40), le dispositif de capture d'images (20) et la source lumineuse (30) étant fixe vis-à-vis du caisson (100).

5. Equipement électronique (1), selon l'une des revendications précédentes, dans lequel le dispositif optique (12) de l'obturateur mobile (10) comprend au moins une portion translucide.

6. Equipement électronique (1), selon l'une des revendications précédentes, dans lequel le dispositif optique (12) forme une seule pièce avec ledit obturateur mobile (10).

7. Equipement électronique (1), selon l'une des revendications précédentes, dans lequel ladite source lumineuse (30) est apte à émettre un clignotement qui est détectable par le dispositif de capture d'images (20), lorsque l'obturateur mobile (10) est dans sa position de repos.

8. Equipement électronique (1), selon la revendication 7, dans lequel le clignotement répond à une séquence complexe.

9. Equipement électronique, selon l'une des revendications 1 à 6, dans lequel le dispositif optique (12) dudit obturateur mobile (10) comporte une figure positionnée en regard du champ de vision du dispositif de capture d'images (20), lorsque l'obturateur mobile (10) est dans sa position de repos.

10. Equipement électronique (1), selon l'une des revendications précédentes, dans lequel l'équipement électronique (1) est un boîtier décodeur.

## Patentansprüche

1. Elektronisches Gerät (1), umfassend:
- ein Gehäuse (100) mit einer ersten Öffnung (101),
- eine Bilderfassungsvorrichtung (20) mit einem Sichtfeld,
- ein bewegliches Verschlusselement (10) mit einer Öffnung (11), wobei das Verschlusselement (10) zwischen einer Arbeitsstellung und einer Ruhestellung verschiebbar auf dem Gehäuse (100) angebracht ist, sodass, wenn sich das bewegliche Verschlusselement (10) in seiner Arbeitsstellung befindet, die Bilderfassungsvorrichtung (20) im Einsatzzustand die äußere Umgebung des Gehäuses (100) durch die erste Öffnung (101) und durch die Öffnung (11) des beweglichen Verschlusselements hindurch erfassen kann, und dass, wenn sich das bewegliche Verschlusselement (10) in seiner Ruhestellung befindet, das bewegliche Verschlusselement (10) die erste Öffnung (101) abdeckt, sodass das Sichtfeld der Bilderfassungsvorrichtung (20) verdeckt wird, und
- eine Lichtquelle (30);
**dadurch gekennzeichnet, dass** das bewegliche Verschlusselement (10) eine optische Einrichtung (12) umfasst, die dafür ausgelegt ist, lichtleitend zu sein, und dass, wenn sich das bewegliche Verschlusselement (10) in seiner Ruhestellung befindet, die optische Einrichtung (12) dafür ausgelegt ist, das Licht von der Lichtquelle (30) bis zu dem Sichtfeld der Bilderfassungsvorrichtung (20) zu leiten.

2. Elektronisches Gerät (1) nach Anspruch 1, wobei die optische Einrichtung (12) derart auf dem beweglichen Verschlusselement (10) angeordnet ist, dass sie sich der Bilderfassungsvorrichtung (20) und der Lichtquelle (30) gegenüberliegend erstreckt, wenn sich das bewegliche Verschlusselement (10) in seiner Ruhestellung befindet.

3. Elektronisches Gerät (1) nach Anspruch 1 oder Anspruch 2, wobei die optische Einrichtung (12) des beweglichen Verschlusselements (10) über das Gehäuse (100) hinaus nach außen vorsteht.

4. Elektronisches Gerät (1) nach einem der Ansprüche 1 bis 3, wobei die Bilderfassungsvorrichtung (20) und die Lichtquelle (30) auf einer Elektronikkarte (40) des elektronischen Geräts (1) befestigt sind, wobei die aus der Elektronikkarte (40), der Bilderfassungsvorrichtung (20) und der Lichtquelle (30) gebildete Anordnung in Bezug auf das Gehäuse (100) feststehend ist.

5. Elektronisches Gerät (1) nach einem der vorhergehenden Ansprüche, wobei die optische Einrichtung (12) des beweglichen Verschlusselements (10) zumindest einen transluzenten Abschnitt umfasst.

6. Elektronisches Gerät (1) nach einem der vorhergehenden Ansprüche, wobei die optische Einrichtung (12) einteilig mit dem beweglichen Verschlusselement (10) ausgebildet ist.

7. Elektronisches Gerät (1) nach einem der vorhergehenden Ansprüche, wobei die Lichtquelle (30) dafür geeignet ist, ein von der Bilderfassungsvorrichtung (20) detektierbares, blinkendes Licht auszusenden, wenn sich das bewegliche Verschlusselement (10) in seiner Ruhestellung befindet.

8. Elektronisches Gerät (1) nach Anspruch 7, wobei das Blinken gemäß einer komplexen Sequenz erfolgt.

9. Elektronisches Gerät nach einem der Ansprüche 1 bis 6, wobei die optische Einrichtung (12) des beweglichen Verschlusselements (10) eine Abbildung enthält, die dem Sichtfeld der Bilderfassungsvorrichtung (20) gegenüberliegend positioniert ist, wenn sich das bewegliche Verschlusselement (10) in seiner Ruhestellung befindet.

10. Elektronisches Gerät (1) nach einem der vorhergehenden Ansprüche, wobei es sich bei dem elektronischen Gerät (1) um eine Decoderbox handelt.

## Claims

1. Electronic apparatus (1) comprising:
- a casing (100) provided with a first opening (101),
- an image capture device (20) having a field of view,
- a movable shutter (10) provided with an opening (11), said shutter (10) being mounted on the casing (100) so as to be movable between a working position and a rest position so that when the movable shutter (10) is in its working position, the image capture device (20) can, during operation, see the exterior of the casing (100) via the first opening (101) and the opening (11) in the movable shutter, and when the shutter (10) is in its rest position, the movable shutter (10) blocks the first opening (101) for the image capture device (20), and
- a light source (30);
**characterised in that** said movable shutter (10) comprises an optical device (12) arranged to guide the light, and **in that** when the movable shutter (10) is in its rest position, the optical device (12) is arranged to guide the light from the light source (30) to the field of view of the image capture device (20).

2. Electronic apparatus (1) according to claim 1, wherein the optical device (12) is arranged on the movable shutter (10) so as to extend with respect to the image capture device (20) and said light source (30) when the movable shutter (10) is in its rest position.

3. Electronic apparatus (1) according to claim 1 or claim 2, wherein the optical device (12) of said movable shutter (10) extends as far as the exterior of said casing (100).

4. Electronic apparatus (1) according to any of claims 1 to 3, wherein the image capture device (20) and said light source (30) are fastened to an electronic card (40) of the electronic apparatus (1), wherein the assembly formed by the electronic card (40), the image capture device (20) and the light source (30) is fixed in place relative to the casing (100).

5. Electronic apparatus (1) according to any of the preceding claims, wherein the optical device (12) of the movable shutter (10) comprises at least one translucent portion.

6. Electronic apparatus (1) according to any of the preceding claims, wherein the optical device (12) and said movable shutter (10) are formed as a single piece.

7. Electronic apparatus (1) according to any of the preceding claims, wherein said light source (30) is capable of emitting a blinking that is detectable by the image capture device (20) when the movable shutter (10) is in its rest position.

8. Electronic apparatus (1) according to claim 7, wherein the blinking has a complex sequence.

9. Electronic apparatus according to any of claims 1 to 6, wherein the optical device (12) of said movable shutter (10) comprises a figure positioned facing the field of view of the image capture device (20) when the movable shutter (10) is in its rest position.

10. Electronic apparatus (1) according to any of the preceding claims, wherein the electronic apparatus (1) is a set-top box.
